(19) Europäisches Patentamt
European Patent Office
Office européen des brevets

(11) EP 1 376 199 B1

(12) **EUROPEAN PATENT SPECIFICATION**

(45) Date of publication and mention of the grant of the patent:
**11.05.2005 Bulletin 2005/19**

(51) Int Cl.[7]: **G02B 27/10**, G02F 1/1333, G02B 5/04

(21) Application number: **03002114.1**

(22) Date of filing: **30.01.2003**

# (54) Multi-display apparatus having optical path changing device

Vorrichtung mit mehreren Anzeigetafeln und einer Vorrichtung zum Ändern der optischen Weglänge

Appareil multi-écrans comportant un dispositif modifiant le chemin optique

(84) Designated Contracting States:
**DE FR GB NL**

(30) Priority: **17.06.2002 KR 2002033725**

(43) Date of publication of application:
**02.01.2004 Bulletin 2004/01**

(73) Proprietor: **SAMSUNG ELECTRONICS CO., LTD.**
**Suwon-City, Kyungki-do (KR)**

(72) Inventors:
- **Cho, Kun-ho**
  **Gwonseon-gu, Suwon-si, Gyeonggi-do (KR)**
- **Kim, Dae-sik**
  **Paldal-gu, Suwon-si, Gyeonggi-do (KR)**
- **Lee, Hee-joong**
  **Dongan-gu, Anyang-si, Gyeonggi-do (KR)**
- **Kim, Tae-hee**
  **Suwon-si, Gyeonggi-do (KR)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 550 155**
**WO-A-02/25362**
**RU-C- 2 106 713**
**RU-C- 2 165 113**
**US-A- 5 751 387**

- **PATENT ABSTRACTS OF JAPAN vol. 010, no. 093 (P-445), 10 April 1986 (1986-04-10) & JP 60 227233 A (MATSUSHITA DENKI SANGYO KK), 12 November 1985 (1985-11-12)**
- **"MOSAIC DISPLAY MULLION CORRECTION" IBM TECHNICAL DISCLOSURE BULLETIN, IBM CORP. NEW YORK, US, vol. 32, no. 3B, 1 August 1989 (1989-08-01), pages 304-306, XP000029846 ISSN: 0018-8689**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 376 199 B1

## Description

BACKGROUND OF THE INVENTION

1. Field of the Invention

The present invention relates to a multi-display apparatus having a plurality of flat panel display devices, and more particularly, to a multi-display apparatus which provides an image without a non display area.

2. Description of the Related Art

A multi-display apparatus means a display apparatus forming one screen area by connecting a plurality of flat panel display devices. Of the multi-display apparatuses, a folding type display apparatus is often used for a portable device such as a notebook computer, while a large screen display apparatus is widely used as a display in a stadium or as an advertisement display elsewhere.

FIG. 1 shows a conventional folding type display apparatus for a notebook computer. As shown in the drawing, the folding type display apparatus is formed of a screen 11 and a main body 13. The screen 11 is encompassed by a light shield area 15 having a predetermined width d1. The light shield area 15 decreases the width of the screen 11 so that a user has the sensation of visual narrowness when viewing the screen 11.

FIG. 2 is a plan view of a flat panel display apparatus connecting conventional two LCD panels. Referring to the drawing, a non display area 18 having a width d2 appears between two screens 14 and 16, which separates an image so that the image quality is lowered.

In the conventional display apparatus having a plurality of flat panel display devices, a boundary surface of a screen corresponding to a portion in which the flat panel display devices are connected, through which no light passes, is closed with a light shield member, so that a non display area where an image is not displayed divides the image and lowers the resolution thereof, thus deteriorating the image quality.

US5751387 proposes to use a circular Fresnel lens on top of a liquid crystal display device which is built up of several liquid crystal display panels, in order to improve the light path of the emitted light from the various light panels. RU2165113 proposes a method for correcting the picture on a cellular matrix display by employing light guide modules to improve the light projection properties. From the Japanese patent abstract JP60227233 is furthermore known a large-sized image screen disclosing the use of light guides positioned on top of a liquid crystal panel wherein on top of the light guides Fresnel lenses are provided to improve the observation characteristics of the large-sized image screen. The Fresnel lenses of JP60227233 are one example of a secondary triangular prism array as used in a multi-display apparatus according to the invention being described in the following.

SUMMARY OF THE INVENTION

To solve the above and other problems, the present invention provides a multi-display apparatus which can presents an image with no non display area on a screen in a display apparatus having a plurality of flat panel display devices connected to one another.

This object is solved by the multi-display apparatus according to claim 1.

The optical path changing unit is formed of an assembly of a first triangular prism array having an inclined surface symmetrical to the boundary surface, a wave guide array having an inclined surface inclined in the same direction as the first triangular prism array and symmetrical to the boundary surface, and a second triangular prism array disposed on the upper surface of the wave guide and having an inclined surface symmetrical to the first triangular prism'array.

The optical path changing unit is a Fresnel lens type triangular prism array formed of triangular prisms having inclined surfaces symmetrical to the boundary surface and arranged concentrically with respect to the center of each of the flat panel display devices. In the triangular prism array, an inclination angle of the inclined surface decreases as a triangular prism locates farther away from the boundary surface.

The flat panel display device is any one of an LCD, a PDP, an FED, and an EL.

BRIEF DESCRIPTION OF THE DRAWINGS

The above features of the present invention will become more apparent by describing in detail preferred embodiments thereof with reference to the attached drawings in which:

- FIG. 1 is a perspective view illustrating a conventional folding type display apparatus;
- FIG. 2 is a plan view of a conventional large screen display apparatus;
- FIG. 3 is a perspective view illustrating a folding type display apparatus according to the present invention;
- FIG. 4 is a plan view illustrating a large screen display apparatus according to the present invention;
- FIG. 5A is a sectional view illustrating a multi-display apparatus according to a first example useful for the understanding of the present invention;
- FIG. 5B is an enlarged view illustrating a portion A of FIG. 5A;
- FIG. 6 is a sectional view illustrating a multi-display apparatus according to a second example useful for the understanding of the present invention;
- FIG. 7 is a sectional view illustrating a multi-display apparatus according to a third example useful for the understanding of the present invention;

FIG. 8 is a sectional view illustrating a multi-display apparatus according to a fourth example useful for the understanding of the present invention;

FIG. 9 is a sectional view illustrating a multi-display apparatus according to a preferred embodiment of the present invention;

FIG. 10A is a plan view illustrating a multi-display apparatus according to the a fifth example useful for the understanding of the present invention; and

FIG. 10B is a sectional view illustrating the multi-display apparatus of FIG. 10A.

## DETAILED DESCRIPTION OF THE INVENTION

In the drawings, the width and height of an optical path changing device are exaggerated for the convenience of explanation.

Referring to FIG. 3, a folding type display apparatus 20 of a multi-display apparatus according to a preferred embodiment of the present invention includes two screens 23 and 25, one side of the screen 23 contacting one side of the screen 25, and a main body 27 disposed at the lower surface of the screens 23 and 25. Two flat panel display devices (not shown) are connected inside the main body 27 and a connection portion remains as a light shield area which does not transmit light. In the present invention, an optical path changing device is arranged on the upper surface of the flat panel display devices including the connection portion to move the optical path to a boundary surface 21 between the screens 23 and 25 so that, as shown in the drawing, the non display area can be removed from the boundary surface 21 of the screens 23 and 25.

Here, although liquid crystal devices (LCD), field effect displays (FED), plasma display panels (PDP), or electroluminescent displays (EL) may be provided as the flat panel display devices, the present invention is not limited thereto.

FIG. 4 shows a large screen display apparatus 30 of the multi-display apparatus according to the present invention. Referring to the drawing, a plurality of screens 33 are arranged like a checkerboard to present a single image. It can be seen that no non display area appears in the boundary surface 31 between the screens 33 like the folding type display apparatus 20 shown in FIG. 3.

As shown in FIGS. 3 and 4, the multi-display apparatus according to the preferred embodiment of the present invention is realized by providing an optical path changing device (not shown) on the upper surface of the flat panel display device.

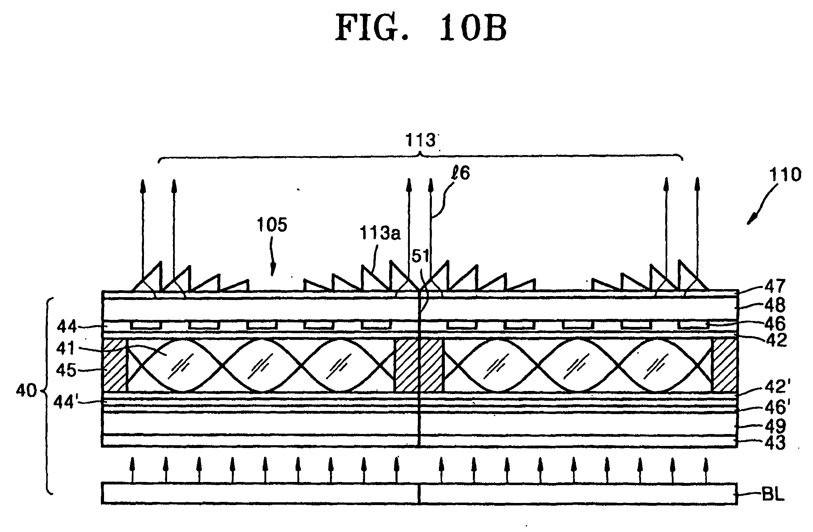

FIGS. 5A through 9 illustrate multi-display apparatuses according to first through fourth examples useful for the undertanding of the present invention and the embodiment according to the invention, which are mainly used as a folding type display apparatus. FIGS. 10A and 10B illustrate multi-display apparatuses according to another example useful for the understanding of the present invention which is mainly used as a large screen display apparatus.

Referring to FIG. 5A, the multi-display apparatus according to the first example includes an LCD device 40 which generates an image, and a triangular prism array 43 arranged on the upper surface of the LCD device 40 as an optical path changing unit. Flat panel display devices such as FET, PDP, and EL can be used instead of the LCD device 40.

In general, an LCD device is a display showing an image by transmitting and blocking light by using liquid crystal substance having dielectric anisotropy. The LCD can be classified into a transmission type LCD which displays an image by transmitting a backlight beam and a reflection type LCD which displays an image by reflecting incident natural light.

The LCD device 40 is a transflective type LCD device and includes upper and lower substrates 48 and 49 arranged to face each other, a pair of transparent electrodes 46 and 46' formed on the lower surface of the upper substrate 48 and the upper surface of the lower substrate 49, in strips, to be perpendicular to each other, a pair of insulation layers 44 and 44' deposited in order on the transparent electrodes 44 and 44', and a pair of alignment layers 42 and 42' formed on the insulation layers 44 and 44'. An LCD layer 41 is formed between the alignment layers 42 and 42' by injecting liquid crystal substance into a space between the upper and lower substrates 48 and 48' sealed by a sealant 45. A polarizing film 47 is attached to the upper surface of the upper substrate 48 to transmit a predetermined polarized light. A transflective reflection film 43 is attached to the lower surface of the lower substrate 49 to reflect natural light incident through the upper substrate 48 and transmit a backlight (BL) beam.

An array 53, which is an optical path changing unit, is formed by arranging a plurality of triangular prisms 53a in strips having an inclined surface at a predetermined angle in a line at one side with respect to a boundary surface 51 of the LCD device 40 and a plurality of triangular prisms 53b at the other side so that the prisms are symmetrical. After passing through the polarized plate 47 of the LCD device 40, light l1 is incident on the triangular prisms 53a and 53b and is refracted twice. As the optical path is moved toward the boundary surface 51, the light 11 is emitted toward a screen (not shown). Thus, owing to the movement of the optical path of the light l1, the non display area appearing in the light shield area is removed. The light shield area is sealed by the sealant 51 and does not transmit light.

FIG. 5B is an enlarged view of a portion A of FIG. 5A. In FIG. 5B, light output from the polarizing film 47 is incident on the triangular prism 53a at a predetermined angle $\delta$ and is refracted at an angle $\phi$ according to the Snell's rule. Then, the light is refracted again as it passes through the triangular prism 53a and is emitted at an angle $\theta$. Assuming that a refractive index of the triangular prism 53a and a refractive index of the polarizing film 47 are n and n' (<n), respectively, since an angle made between the inclined surface of the triangular prism 53a and the surface of the polarizing film 47 is the same as the refractive angle θ of the light output from the triangular prism 43a, the angel θ can be obtained from Equation 1.

[Equation1]

$$n' \sin\delta = n \sin\phi = \sin\theta$$

As shown in FIGS. 5A and 5B, the triangular prisms 53a and 53b having the inclined surfaces inclined at a predetermined angle with respect to the boundary surface 51 are arranged symmetrically with respect to the boundary surface 51. Then, the light 11 output from the polarizing film 47 proceeds with the optical path horizontally shifted toward the boundary surface 51, so that the non display area is removed from an image displayed on the screen.

FIG. 6 shows a flat panel display device according to the second preferred example. Referring to FIG. 6, a flat panel display device 60 according to the second example uses the same device as the LCD device of the plat panel display device 50 according to the first example and includes first and second triangular prism arrays 63 and 73 formed on the LCD device as an optical path changing unit.

The second triangular prism array 73 is formed of a plurality of prisms 73a arranged such that inclined surfaces are symmetrical to the left and right with respect to the boundary surface 51, like the triangular prism array 53 as shown in FIG. 5A. The first triangular prism array 63 is disposed under the second triangular prism array 73 at a predetermined interval. In the first triangle array 63, inclined surfaces of the left and right prism arrays 63a are arranged to be symmetrical to each other and also symmetrical to the inclined surfaces of the second triangular prism array 73.

Referring to FIG. 6,light 12 output from the polarizing film 47 passes through the first triangular prism array 63 and refracted twice. While passing through the second triangular prism array 63, the light 12 is refracted twice and the optical path of the light 12 are horizontally shifted toward the boundary surface 51. The light 12 emitted to a screen (not shown) can form an image without non display area.

FIG. 7 shows a flat panel display device according to the third example. Referring to FIG. 7, a flat panel display device 70 according to the third example uses the same device as the LCD device of the plat panel display device 50 according to the first example and includes a wave guide array 75 formed on the LCD device as an optical path changing unit. The wave guide array 75 includes a plurality of wave guides 75a which are parallel to one another and inclined at a predetermined angle with respect to the boundary surface 51.

Light 13 output from the polarizing film 47 is incident on the wave guide 75a at a predetermined angle to proceed by being totally reflected. Since the wave guide 75A is inclined at a predetermined angle with respect to the boundary surface 51, the light 13 proceeding through the wave guide 75a is guided toward the boundary surface 51. For example, the light 13 emitted perpendicularly to the flat surface of the polarizing film 47 is totally reflected at an angle of 45° by the inner surface of the wave guide 75a having an inclination angle of 45° and is output to be perpendicular to the surface of the wave guide 75a. Thus, a complete image can be formed by removing the non display area.

FIG. 8 shows a flat panel display device according to the fourth example. Referring to FIG. 8, a flat panel display device 80 according to the fourth example uses the same device as the LCD device of the plat panel display device 50 according to the first example and includes an assembly of a wave guide array 85 and a triangular prism array 83 disposed above the LCD device as an optical path changing unit.

The wave guide array 85 is formed of a plurality of wave guide 75a which are arranged parallel to one another and symmetrically inclined at a predetermined angle with respect to the boundary surface 51 similar to the wave guide array 75 shown in FIG. 7. The triangular prism array 83 is formed of triangular prisms 83a having surfaces inclined by a predetermined angle with respect to the boundary surface 51 which are arranged symmetrically to the left and right with respect to the boundary surface 51, similarly to the triangular prism array 53 shown in FIG. 5. Light 14 passes through the wave guide array 85 and is refracted twice in the prism array 83. Then, the light 14 is output toward the boundary surface 51 of a screen (not shown) so that a complete image without a non display area is realized.

FIG. 9 shows a flat panel display device according to a fifth preferred embodiment of the present invention. Referring to FIG. 9, a flat panel display device 90 according to the preferred embodiment of the present invention uses the LCD device 40 of the plat panel display device 50 according to the first example and includes an assembly of a first triangular prism array 93 disposed on the LCD device 40 as an optical path changing unit, a wave guide array 95 disposed above the first triangular prism array 93 by being separated a predetermined distance therefrom, and a second triangular prism array 103 disposed on the wave guide array 95, as an optical path changing unit.

Light 15 is refracted twice by the first triangular prism array 93 formed of a plurality of prism arrays 93a arranged symmetrically with respect to the boundary surface 51 and is input to the wave guide array 95 formed of a plurality of wave guides 95a arranged symmetrically with respect to the boundary surface 51. Then, the light 15 is totally reflected by the inner surface of the wave guide 95a and proceeds to be incident on the second triangular prism array 103 having inclined surfaces symmetrical to the first triangular prism array 93 and simultaneously arranged to the left and right and is refracted twice and emitted to a screen (not shown).

In the flat panel display devices according to the first through fourth examples and the preferred embodiment of the present invention, although the angles of the inclined surfaces of the triangular prisms 53a, 63a, 73a, 83a, 93a, and 103a can be formed identical. However, preferably by decreasing the inclination angle from the boundary surface 51 toward the outside, distortion of an image can be reduced.

In the flat panel display devices according to the first through fourth example and the preferred embodiment of the present invention, since the angles of the inclined surfaces of the triangular prisms 53a, 63a, 73a, 83a, 93a, and 103a can be formed to decrease from the boundary surface 51 toward the outside, a view angle is extended and the non display area is removed so that resolution and image quality can be improved.

FIG. 10A shows an optical path changing unit of a flat panel display device according to a fifth example. FIG. 10B is a sectional view of the flat panel display device of FIG. 10A. A flat panel display device 110 according to the fifth example, as shown in FIGS. 10A and 10B, mainly uses a large screen display device where a plurality of flat panel display devices are connected.

Referring to FIGS. 10A and 10B, a plurality of flat panel display devices (not shown), here four flat panel display devices, are connected like a chess board and a plurality of Fresnel lens type triangular prisms 113a of a Fresnel lens type are coaxially arranged on each of the flat panel display device. The triangular prisms 113a are arranged symmetrically to the left and right with respect to a center portion 105 and a boundary surface 111 where two screens contact each other, forming a triangular prism array 113. The inclination angle of an inclined surface of each of the triangular prisms 113a which is adjacent to the boundary surface 111 decreases toward the central portion of each panel display device. The triangular prisms 113a are not arranged in the center portion 105 of the screen.

Here, a Fresnel lens is formed by separating a plurality of circular lenses to generate a plurality of parallel beams. Thus, the triangular prisms 113a are arranged concentrically and make light emitted from the flat panel display device into a plurality of parallel beams by gradually decreasing the inclination angle of the inclined surface from a predetermined angle to 0°.

Light 16 emitted close to the boundary surface 111 is incident on the Fresnel lens typetriangular prism array 113 and is refracted twice so that an optical path of the light 16 is guided toward the boundary surface 111. Since the inclination angle of the triangular prism 113a decreases toward the central portion 105 of the screen, a degree of horizontal movement of an optical path of the light 16 emitted closer to the central portion 105 of the screen than the boundary surface 111 is lowered so that distortion of an image is prevented. Since the triangular prism 113a is not arranged at the central portion 105 of the screen, the light 16 is emitted at the original emission angle. The above Fresnel lens type triangular prism array 113 is arranged on the flat panel display device 40 so that an image displayed on a plurality of large screens is not divided or distorted and can be smoothly presented.

In the present invention, an optical path changing unit is provided above a plurality of flat panel display devices to move an optical path of the light emitted from the flat panel display devices toward the boundary surface. Thus, a non display area of an image displayed on a screen is removed and a view angle is extended so that resolution and image quality are improved.

While this invention has been particularly shown and described with reference to preferred embodiments thereof, it will be understood by those skilled in the art that various changes in form and details may be made therein without departing from the spirit and scope of the invention as defined by the appended claims.

## Claims

1. A multi-display apparatus comprising:

    a plurality of flat panel display devices (40) connected to one another as sides thereof contact one another; and

    an optical path changing unit having an inclined surface symmetrical to a boundary surface (51) of the flat panel display devices (40) and shifting light emitted from the flat panel display devices (40) toward the boundary surface (51) between the flat panel display devices (40) so that an image without a non display area is displayed,

    wherein the optical path changing unit is formed of an assembly of a first triangular prism array (93) having an inclined surface symmetrical to the boundary surface (51), a wave guide array (95) having an inclined surface inclined in the same direction as the first triangular prism array (93) and symmetrical to the boundary surface (51), and a second triangular prism array (103) disposed on the upper surface of the wave guide (93) and having an inclined surface symmetrical to the first triangular prism array (93).

2. The multi-display apparatus as claimed in claim 1, wherein the triangular prism array is formed of a plurality of arrays in which an inclination surface of an upper triangular prism array (73) and an inclination surface of a low triangular prism array (63) are symmetrical.

3. The multi-display apparatus as claimed in claim 1 or 2, wherein the optical path changing unit is a Fresnel lens type triangular prism array (113) formed of triangular prisms (113a) having inclined surfaces symmetrical to the boundary surface (51) and arranged concentrically with respect to the centre (105) of each of the flat panel display devices (40).

4. The multi-display apparatus as claimed in one of claims 1 to 3, wherein in the triangular prism array (53) an inclination angle of the inclined surface decreases as a triangular prism (53a) locates farther away from the boundary surface (51).

5. The multi-display apparatus as claimed in one of the claims 1 to 4, wherein the flat panel display device (40) is any one of an LCD, a PDP, an FED, and an EL.

**Patentansprüche**

1. Vorrichtung mit mehreren Anzeigen, mit:

   mehreren Flachbildschirmen (40), die miteinander verbunden sind, wobei sich Seiten davon einander berühren, und

   einer Einheit zum Ändern der optischen Weglänge mit einer schrägen Oberfläche symmetrisch zu einer Grenzfläche (51) zwischen den Flachbildschirme (40) und die Licht, das von den Flachbildschirmen (40) ausgesendet wird, in Richtung der Grenzfläche (51) zwischen den Flachbildschirmen (40) verschiebt, um ein Bild ohne einen Nichtanzeigebereich darzustellen,

   wobei die Einheit zum Ändern der optischen Weglänge umfasst: eine erste Gruppierung dreieckiger Prismen (93) mit einer schrägen Oberfläche symmetrisch zur Grenzfläche (51), eine Wellenleitergruppierung (95) mit einer schrägen Obefläche, die in die gleiche Richtung geneigt ist wie die erste Gruppierung dreieckiger Prismen (93) und die symmetrisch zur Grenzfläche (51) ist, und eine zweite Gruppierung dreieckiger Prismen (103), die auf der oberen Oberfläche des Wellenleiters (93) angeordnet ist und eine schräge Obefläche symmetrisch zur ersten Gruppierung dreieckiger Prismen (93) aufweist.

2. Vorrichtung mit mehreren Anzeigen nach Anspruch 1, wobei die Gruppierung dreieckiger Prismen aus mehreren Gruppierungen gebildet ist, wobei eine schräge Oberfläche einer oberen Gruppierung dreieckiger Prismen (73) und eine schräge Oberfläche einer unteren Gruppierung dreieckiger Prismen (63) symmetrisch zueinander sind.

3. Vorrichtung mit mehreren Anzeigen nach Anspruch 1 oder 2, wobei die Einheit zum Ändern der optischen Weglänge eine Gruppierung dreieckiger Prismen des Typs Fresnellinse (113) ist, die aus dreieckigen Prismen (113a) gebildet ist, wobei diese schräge Oberflächen symmetrisch zur Grenzfläche (51) aufweisen und bezüglich der Mitte (105) eines jeden Flachbildschirms (40) konzentrisch angeordnet sind.

4. Vorrichtung mit mehreren Anzeigen nach einem der Ansprüch 1 bis 3, wobei in der Gruppierung dreieckiger Prismen (53) der Neigungswinkel der schrägen Oberfläche abnimmt je weiter ein dreieckiges Prisma (53a) von der Grenzfläche (51) entfernt ist.

5. Vorrichtung mit mehreren Anzeigen nach einem der Ansprüche 1 bis 4, wobei der Flachbildschirm ein LCD, ein PDP, ein FED oder ein EL Flachbildschirm ist.

**Revendications**

1. Appareil multi-affichages comprenant :

   une pluralité de dispositifs d'affichage à écran plat (40) connectés les uns aux autres leurs côtés en contact les uns avec les autres, et

   une unité de changement de chemin optique ayant une surface inclinée symétrique à une surface limite (51) des dispositifs d'affichage à écran plat (40) et déviant la lumière émise par les dispositifs d'affichage à écran plat (40) vers la surface limite (51) entre les dispositifs d'affichage à écran plat (40) de manière à ce qu'une image sans zone de non-affichage soit affichée,

   dans lequel l'unité de changement de chemin optique est formée d'un assemblage d'un premier réseau de prismes triangulaires (93) ayant une surface inclinée symétrique à la surface limite (51), d'un réseau de guides d'onde (95) ayant une surface inclinée dans la même direction que le premier réseau de prismes triangulaires (93) et symétrique à la surface limite (51) et d'un second réseau de prismes triangulaires (103) disposé sur la surface supérieure du guide d'onde (93) et ayant une surface inclinée symétrique au premier réseau de prismes triangulaires (93).

2. Appareil multi-affichages tel que revendiqué dans la revendication 1, dans lequel le réseau de prismes triangulaires est formé d'une pluralité de réseaux dans lesquels une surface d'inclinaison d'un réseau supérieur de prismes triangulaires (73) et une surface d'inclinaison d'un réseau inférieur de prismes triangulaires (63) sont symétriques.

**3.** Appareil multi-affichages tel que revendiqué dans les revendications 1 ou 2, dans lequel l'unité de changement de chemin optique est un réseau de prismes triangulaires de type lentille de Fresnel (113) formé de prismes triangulaires (113a) ayant des surfaces inclinées symétriques à la surface limite (51) et disposés de manière concentrique par rapport au centre (105) de chacun des dispositifs à écran plat (40).

**4.** Appareil multi-affichages tel que revendiqué dans une des revendications 1 à 3, dans lequel, dans le réseau de prismes triangulaires (53), un angle d'inclinaison de la surface inclinée décroît à mesure qu'un prisme triangulaire (53a) se situe plus loin de la surface limite (51).

**5.** Appareil multi-affichages tel que revendiqué dans une des revendications 1 à 4, dans lequel le dispositif d'affichage à écran plat (40) est un quelconque des dispositifs suivants : LCD, PDP, FED ou EL.

FIG. 1

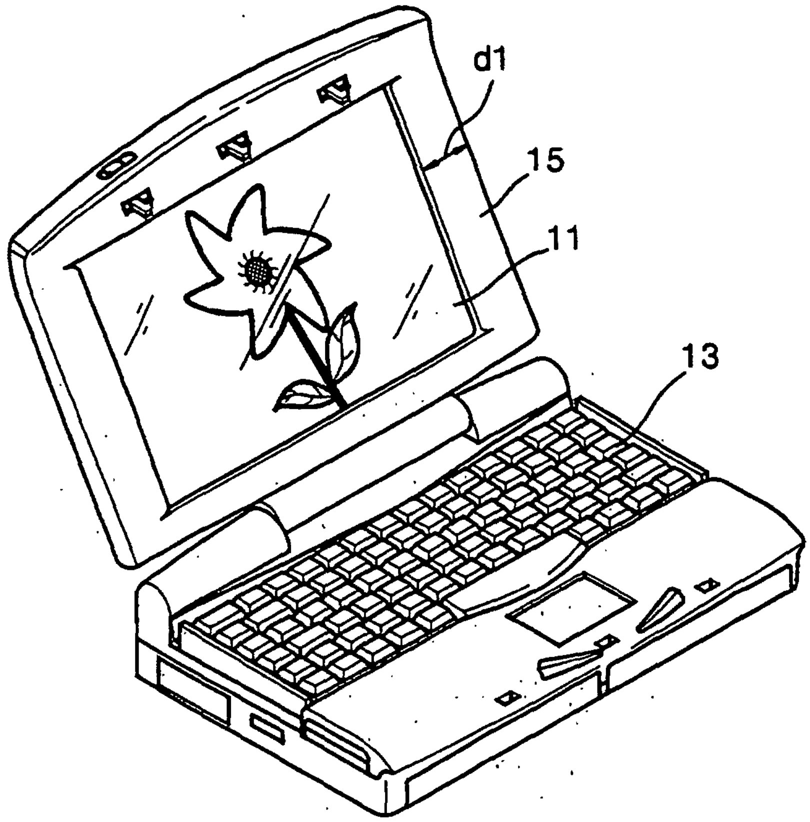


FIG. 2

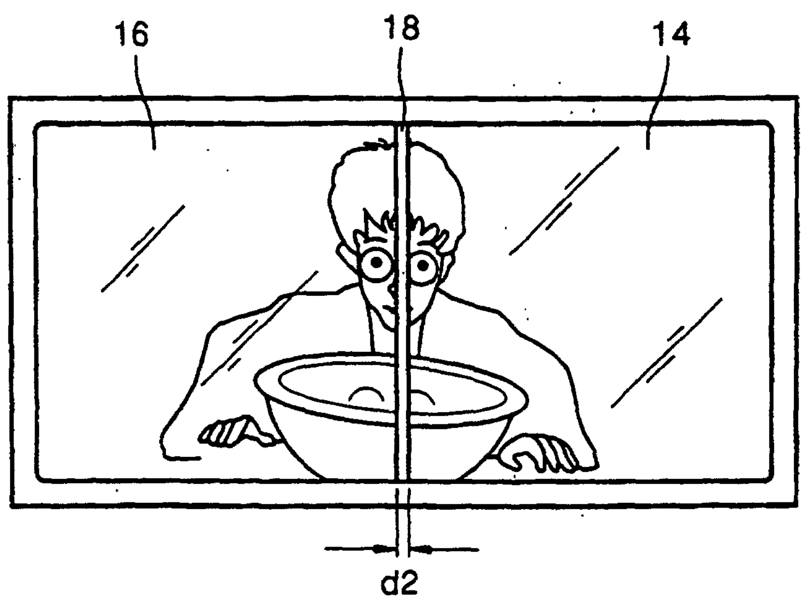

FIG. 3

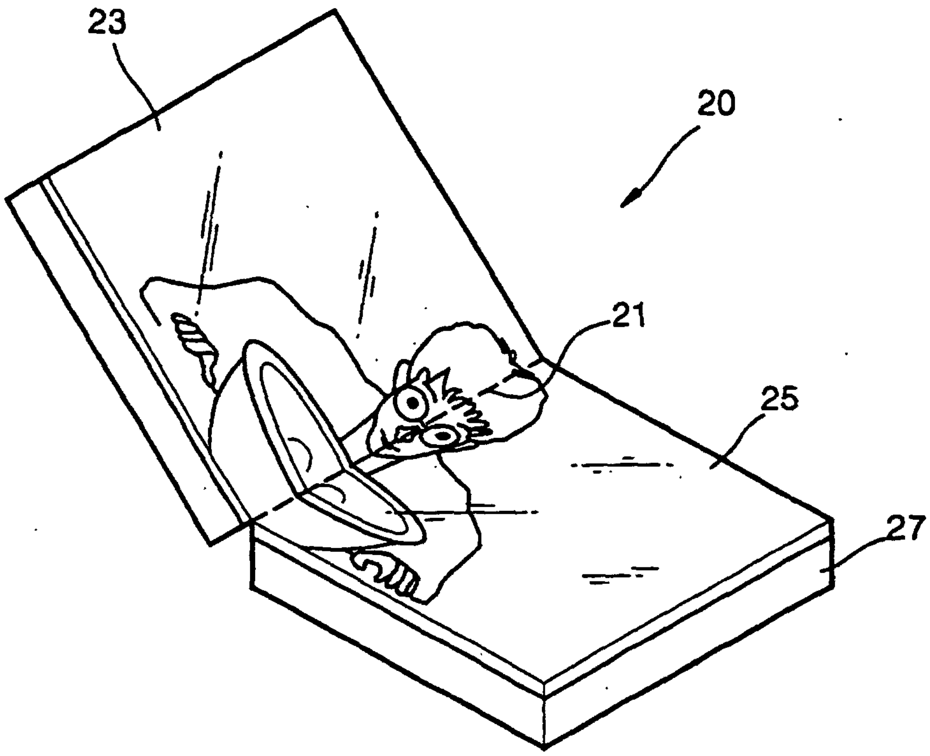


FIG. 4

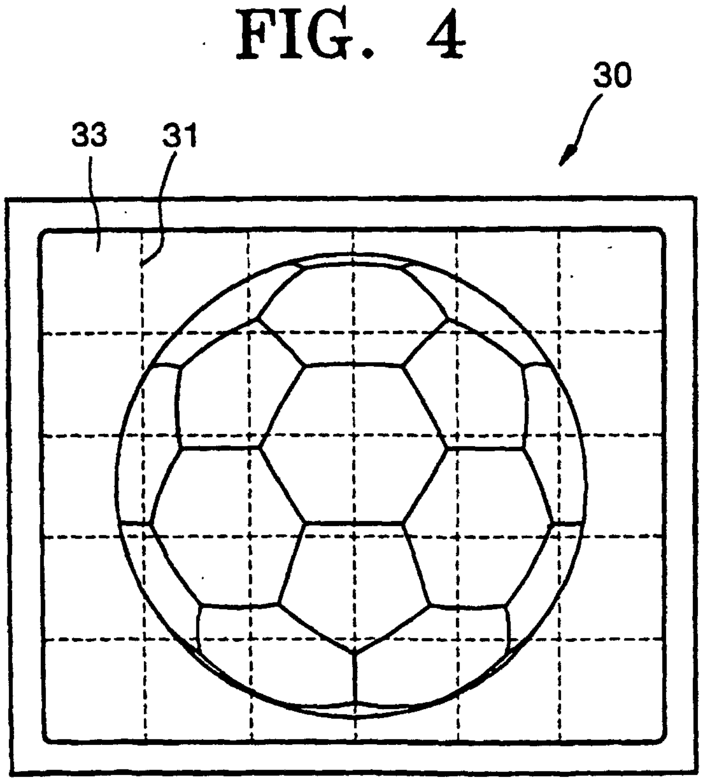

FIG. 5A

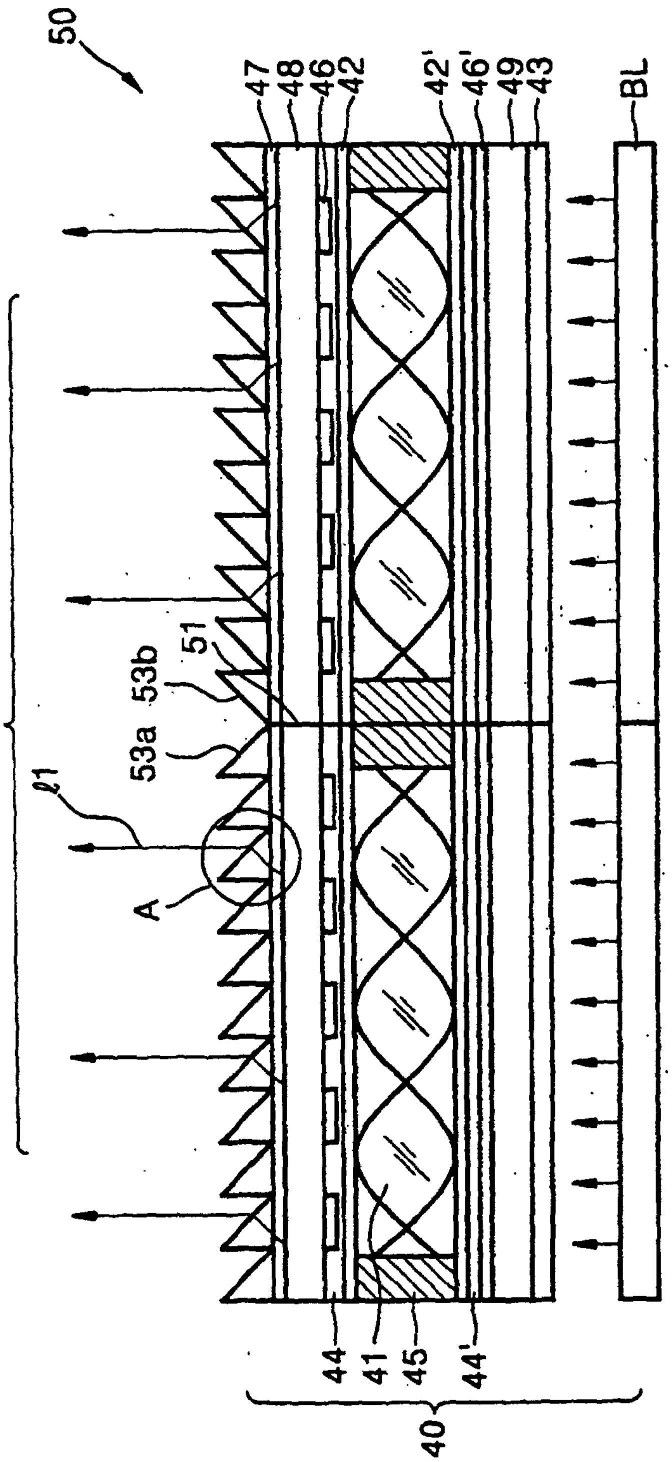

FIG. 5B

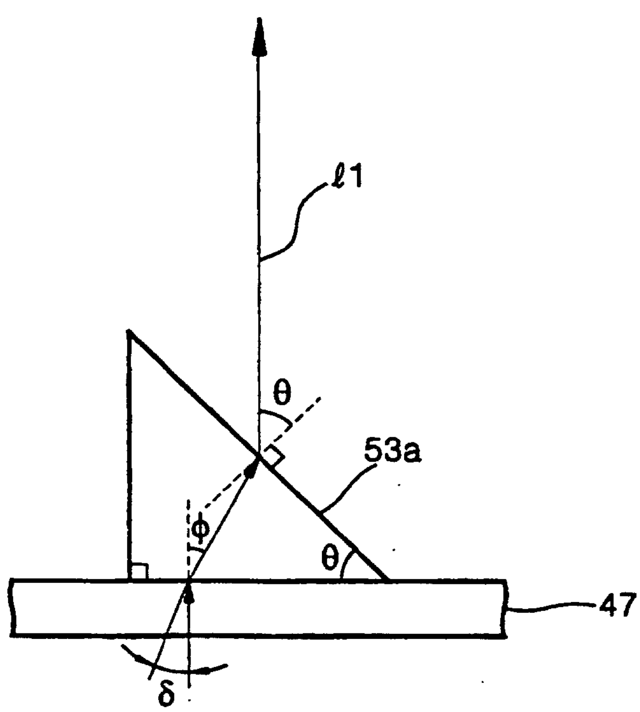

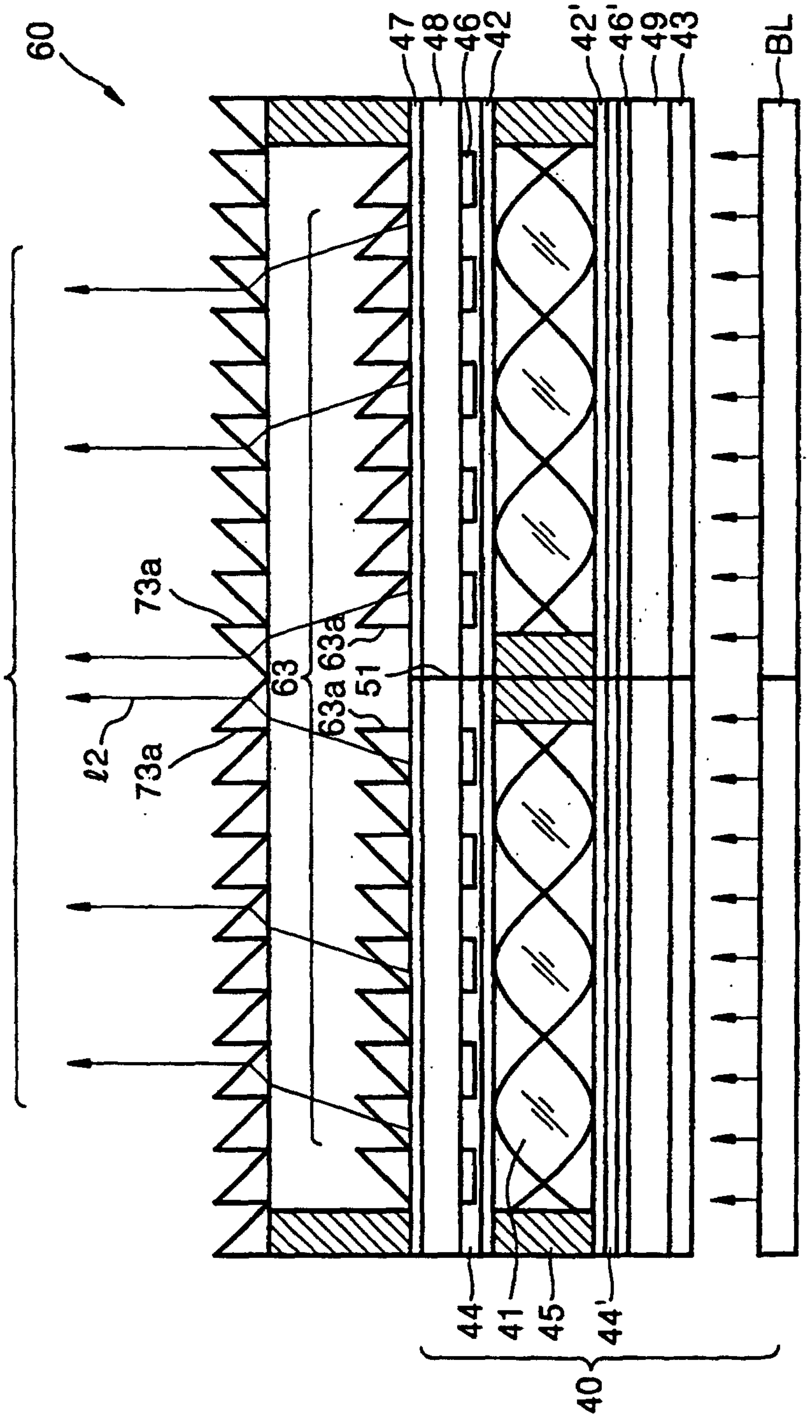


FIG. 6

FIG. 7

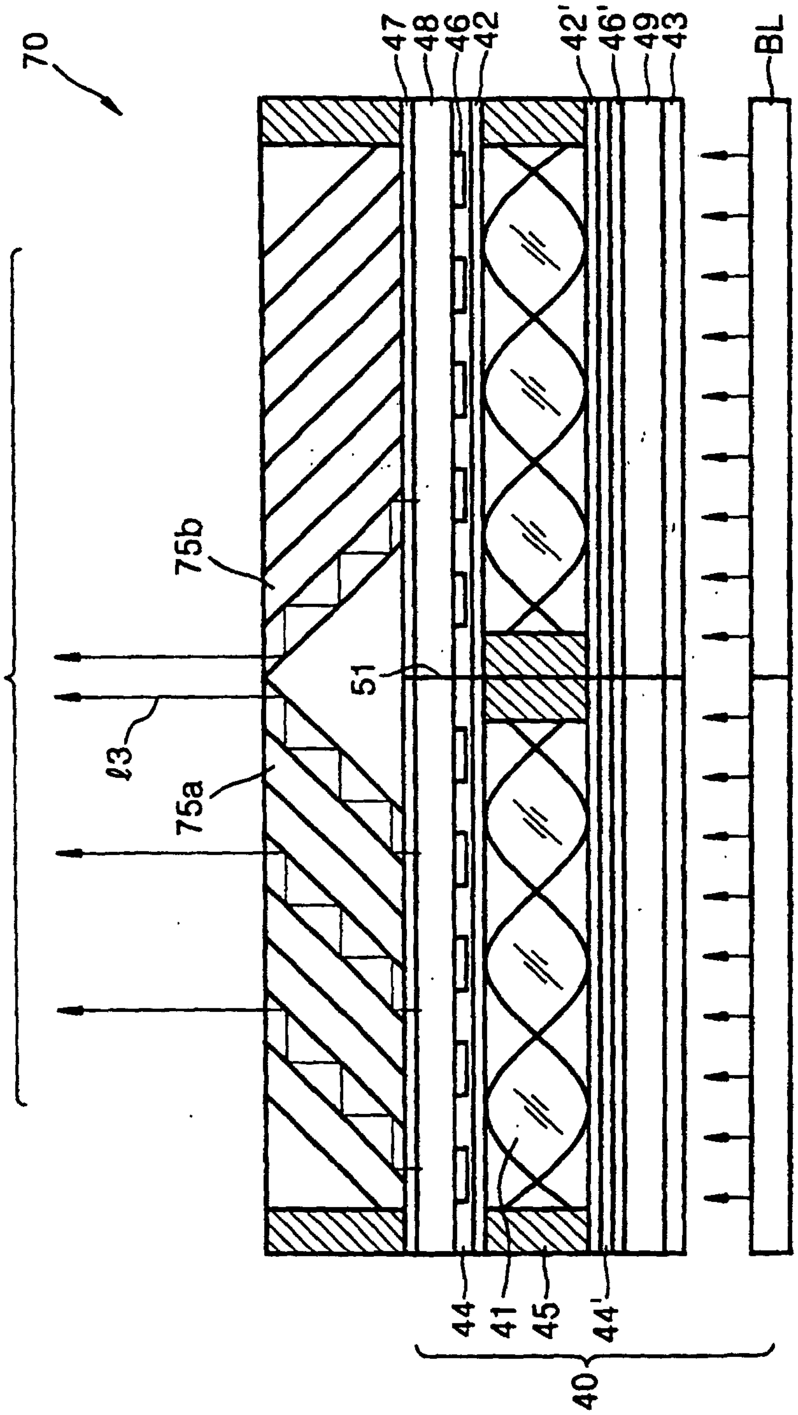

FIG. 8

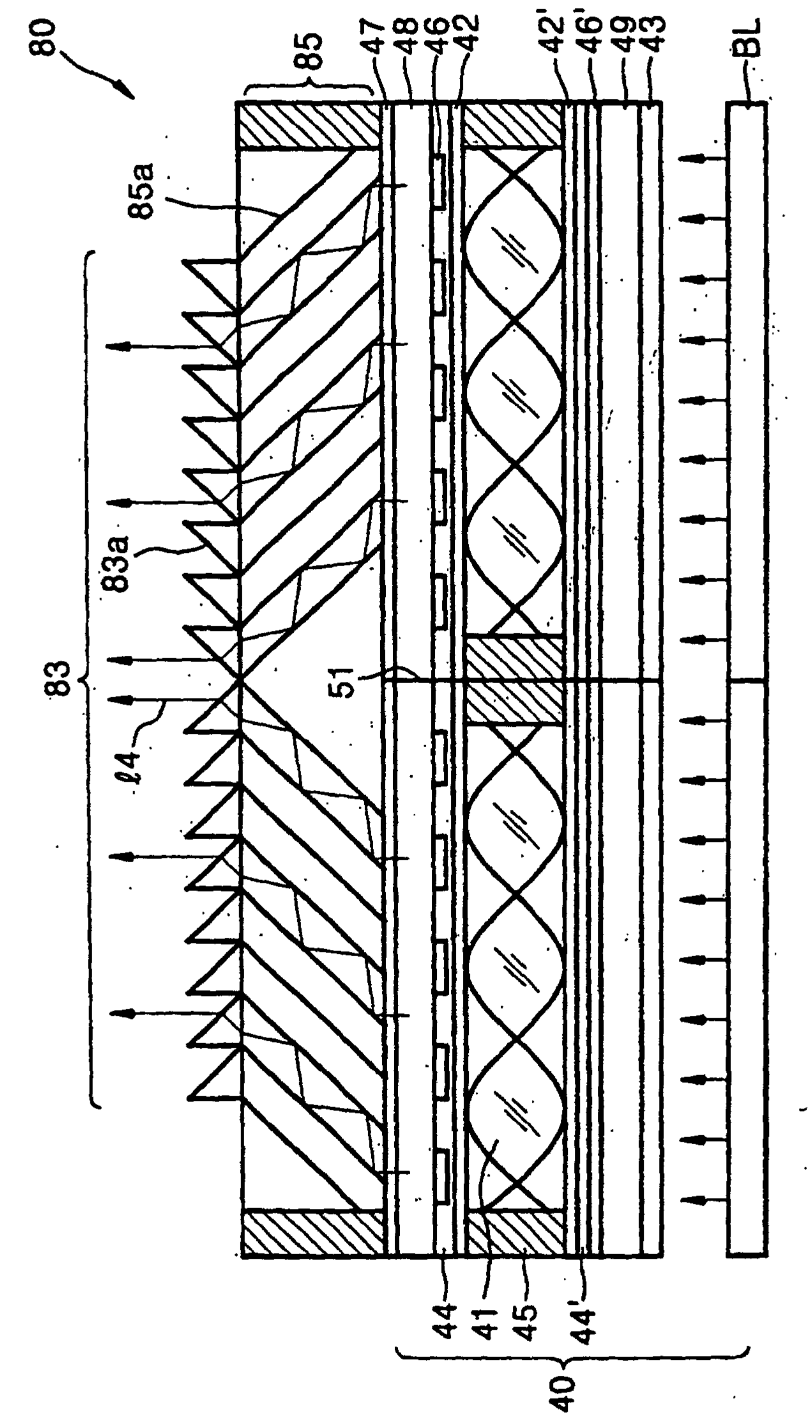

FIG. 9

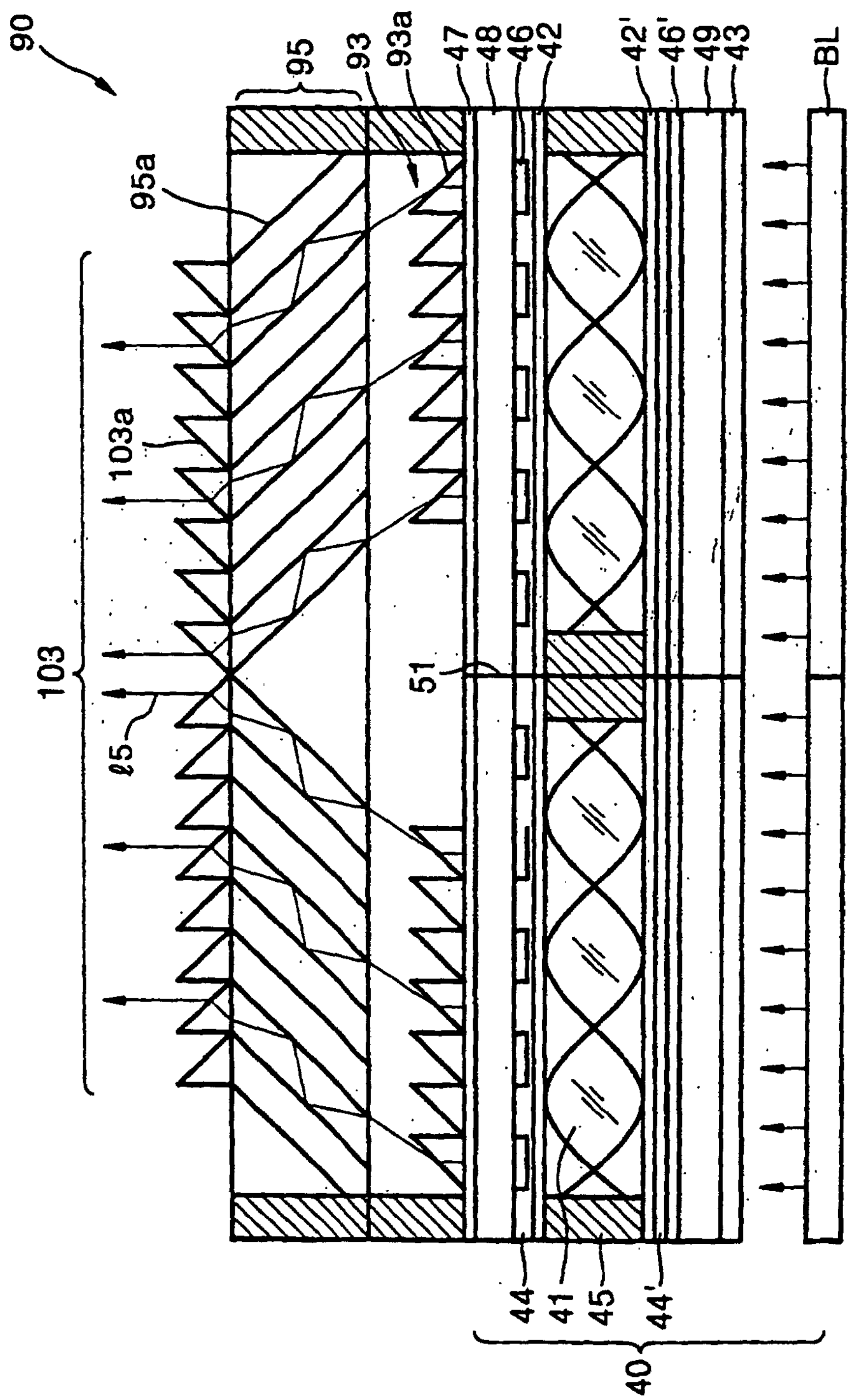

90
95
93
93a
47
48
46
42
42'
46'
49
43
BL
95a
103a
103
ℓ5
51
44
41
45
44'
40

FIG. 10A

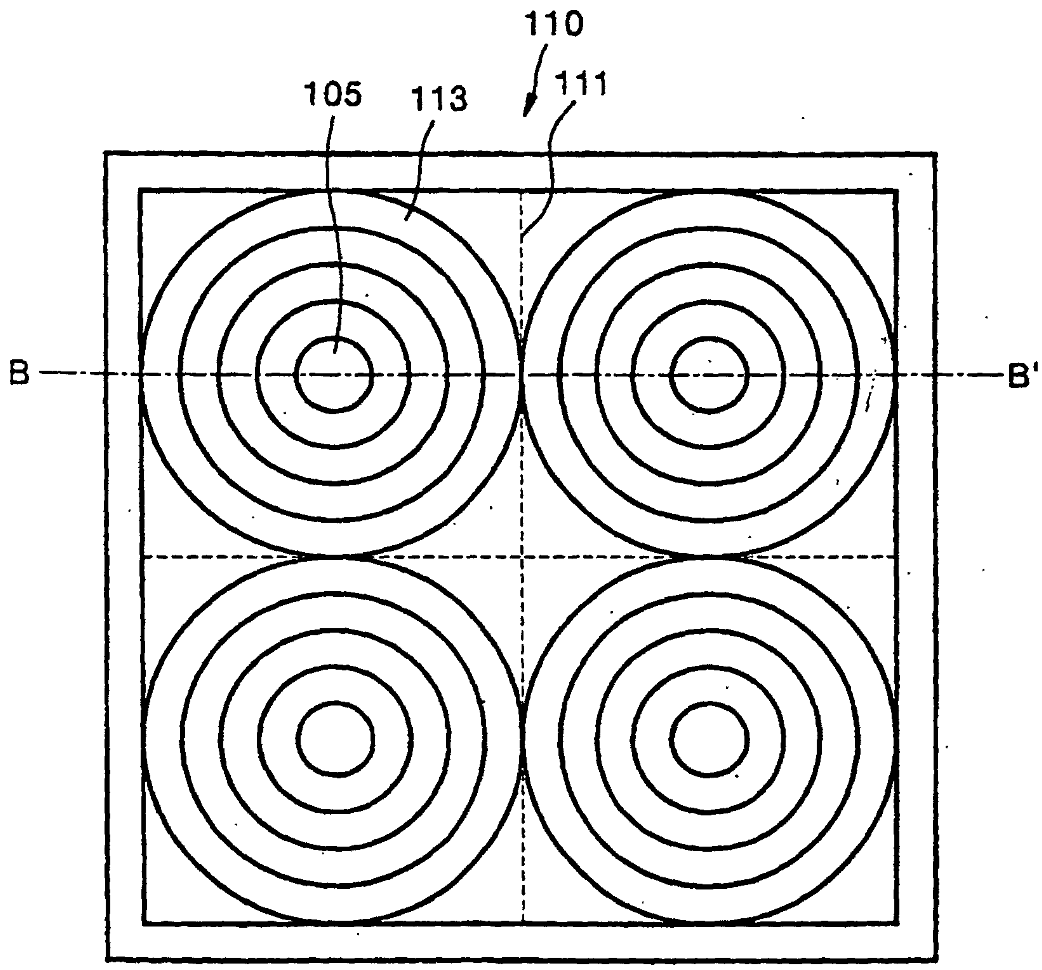

FIG. 10B